# DEMANDE DE BREVET EUROPEEN

(11) **EP 2 232 971 A1**
(43) Date de publication de la demande: **29.09.2010**
(21) Numéro de dépôt: 10157550.4
(22) Date de dépôt: 24.03.2010
(51) Int. Cl.: A01B 15/16

(54) **Disque de labour et engin de labour comportant au moins un train équipé d'un tel disque**

(30) Priorité: 25.03.2009 FR 0901416
(71) Demandeur: Javerlhac, Jean-Charles, 16300 Guimps (FR)
(72) Inventeur: Javerlhac, Jean-Charles, 16300 Guimps (FR)
(74) Mandataire: Leszczynski, André

(57) **Abrégé**

La présente invention concerne un disque de labour (10) destiné à être monté libre en rotation sur un engin de labour, comportant des pales (20), chacune des pales comportant :
- un premier bord (21) convexe vers l'extérieur,
- un deuxième bord (22) concave vers l'extérieur, opposé au premier, et
- un troisième bord (23) adjacent aux premier et second bords, formant un angle obtus (α₁) avec le premier bord et un angle aigu (α₂) avec le second bord, et définissant respectivement des première (24) et deuxième (25) pointes de la pale,

caractérisé par le fait qu'au moins l'une des pointes (24; 25) d'au moins une pale (20) est repliée par rapport au reste de la pale.

## Description

La présente invention concerne les disques de labour destinés à être montés avec plusieurs autres disques identiques ou différents librement en rotation autour d'un axe solidaire d'un châssis d'un engin de labour, notamment d'une charrue. L'axe peut être parallèle au sol et incliné par rapport à la direction de déplacement de l'engin, ou encore être perpendiculaire à la direction de déplacement de l'engin, de manière à imprimer un mouvement de rotation aux disques.

De tels disques peuvent comporter des pales, étant centré sur leur axe de rotation. On connaît de tels disques notamment par la demande de brevet EP 0 471 719, qui montre des disques en acier trempé mobiles sur leur axe de rotation.

On connaît par le brevet US 2 034 579 des disques de labour présentant des encoches à leur périphérie. De tels disques ne donnent cependant pas entière satisfaction car d'une part ils ont tendance à recueillir et à accrocher les végétaux poussant à la surface du terrain labouré et d'autre part la surface du terrain labouré ne se présente pas toujours avec la structure que l'on souhaite lui conférer.

La demande EP-A-0 162 197 décrit une charrue à disques entraînés en rotation, dont la périphérie présente des lobes convexes réunis entre eux par des parties radiales de manière à réaliser des découpes dans le sol.

Un autre inconvénient des disques de labour connus réside dans le fait qu'ils forment dans le terrain une semelle, c'est-à-dire qu'ils créent une surface de séparation franche entre la partie du terrain qui est labourée et qui est par conséquent meuble et la partie non labourée qui est par conséquent dure.

La présente invention vise à pallier à tout ou partie de ces inconvénients.

L'invention a pour objet, selon l'un de ses aspects, un disque de labour destiné à être monté libre en rotation sur un engin de labour, comportant des pales, chacune des pales comportant :
- un premier bord convexe vers l'extérieur,
- un deuxième bord concave vers l'extérieur, opposé au premier, et
- un troisième bord adjacent aux premier et second bords, formant un angle obtus avec le premier bord et un angle aigu avec le second bord, et définissant respectivement des première et deuxième pointes de la pale,
   au moins l'une des pointes d'au moins une pale étant repliée par rapport au reste de la pale.

La présence des pales présente non seulement l'avantage de permettre d'éviter la formation d'une semelle du fait que la profondeur d'attaque du terrain varie au fur et à mesure de l'avancement, mais encore de briser plus efficacement les mottes de terre.

En outre, un tel disque permet d'obtenir un dérapage plus important et de diminuer le lissage du sol.

Le second bord concave d'une pale peut s'étendre en direction du centre du disque.

Au moins la première pointe d'au moins une pale peut être repliée par rapport au reste de la pale. Toutes les premières pointes de l'ensemble des pales du disque peuvent être repliées. Elles peuvent être toutes repliées dans le même sens, ou en variante deux premières pointes successives peuvent être repliées dans des sens opposés.

Au moins une pale peut être repliée par rapport au reste de la pale. Toutes les deuxième pointes de l'ensemble des pales du disque peuvent être repliées. Elles peuvent être toutes repliées dans le même sens, ou en variante deux deuxièmes pointes successives peuvent être repliées dans des sens opposés.

Les deux pointes d'au moins une pale peuvent être repliées par rapport au reste de la pale, chacune dans deux sens opposés. Les deux pointes de l'ensemble des pales peuvent être repliées par rapport au reste de la pale, chacune dans deux sens opposés.

Les première et/ou deuxième pointes de deux pales successives peuvent être repliées dans le même sens.

Les première et/ou deuxième pointes de deux pales successives peuvent être repliées dans deux sens opposés.

Le disque peut comporter une partie centrale sensiblement plane.

Le disque peut être percé en son centre par un orifice central pour sa fixation à un arbre, de forme générale par exemple polygonale, par exemple carrée ou circulaire.

Le disque peut comporter un nombre pair de pales. Un nombre pair de pales peut être préféré dans le cas où le disque est destiné à être utilisé sur un axe transversal à une direction de déplacement de l'engin de labour.

Le disque peut comporter un nombre impair de pales. Un nombre impair de pales peut être préféré dans le cas où le disque est destiné à être installé sur un axe oblique par rapport à une direction de déplacement de l'engin de labour.

L'ensemble des pales d'un disque peut être identiques. Les pales d'un disque peuvent être équiréparties sur la périphérie du disque.

Au moins une pale, voire toutes les pales, peuvent avoir une dimension transversale mesurée entre les premier et second bords qui diminue en allant du centre du disque vers le troisième bord.

Le disque peut présenter une forme générale concave, son centre étant décalé d'un même côté de l'ensemble de sa périphérie. Dans ce cas, la première et/ou la deuxième pointe d'une pale peut être repliée vers l'intérieur de la concavité du disque, voire toutes les premières et/ou deuxièmes pointes de l'ensemble des pales du disque peuvent être repliées vers l'intérieur de la concavité du disque. En variante, la première et/ou la deuxième pointe d'une pale peut être repliée vers l'extérieur de la concavité du disque, voire toutes les premières et/ou deuxièmes pointes de l'ensemble des pales du disque peuvent être repliées vers l'extérieur de la concavité du disque.

En variante, le disque peut s'étendre généralement dans un plan à l'exception des pointes repliées des pales.

L'invention a encore pour objet un engin de labour comportant au moins un train de disques équipé d'au moins un disque tel que décrit ci-dessus, voire plusieurs disques, par exemple tous ses disques étant tels que décrits ci-dessus.

Le train de disques peut comporter un ou plusieurs disques conformes à l'invention, ainsi que des disques de forme différente, par exemple des disques lobés, ou en variante tous les disques peuvent être conformes à l'invention. Le contour d'au moins un des disques de l'engin peut être quelconque. Au moins l'un des disques peut être lobé, c'est-à-dire comporter un périmètre défini par une succession d'arcs de cercle convexe, ou encore être un disque présentant à sa périphérie une série d'entailles en arc de cercle concave, ou encore un disque convexe dont les bords présentent des nervures ou ondulations qui assurent un ameublissement du sol supplémentaire, ou encore un disque dont la périphérie est circulaire.

Le train de disques peut s'étendre selon un axe oblique par rapport à la direction de déplacement de l'engin. Le train de disques peut alors être déplacé obliquement par rapport à la direction de déplacement de l'engin de labour.

En variante, le train de disques peut s'étendre selon un axe transversal par rapport à la direction de déplacement de l'engin. Le train de disque peut alors être déplacé transversalement par rapport à la direction de déplacement de l'engin de labour.

On peut choisir l'angle d'inclinaison du train de disques par rapport à la direction de déplacement de l'engin de labour en fonction par exemple du nombre pair ou impair des pales des disques du train, voire du sens de repli des pointes des pales.

Lorsque les pointes des pales d'un disque sont repliées toutes dans le même sens, le train de disques peut être déplacé obliquement par rapport à la direction de déplacement de l'engin de labour. Dans ce cas, l'engin de labour peut permettre d'obtenir un déplacement latéral du sol.

Lorsque les pointes de deux pales successives sont repliées dans des sens opposés, le train de disques peut être déplacé de préférence transversalement par rapport à la direction de déplacement de l'engin de labour. Dans ce cas, l'engin de labour peut travailler sans déplacement latéral du sol.

L'engin de labour peut comporter un ou plusieurs trains de disques successifs.

Selon un exemple de réalisation de l'invention, le train de disques situé à l'arrière de l'engin peut être basculé autour d'un axe vertical, soit dans une position où les disques présentent une face, par exemple une face convexe le cas échéant, dans la direction de déplacement de l'engin, qui peut alors fonctionner notamment comme semoir pour effectuer une préparation du sol telle qu'un hersage ou un rappui, soit dans une position où les disques présentent une face, par exemple une face concave le cas échéant, en direction de l'avancement de l'engin, ce qui leur permet d'effectuer un labour traditionnel.

L'engin peut comporter deux trains de disques disposés symétriquement par rapport à l'axe de l'engin, qui peuvent être basculés simultanément et qui permettent d'équilibrer les forces latérales qui s'exercent sur l'engin. Il peut être avantageux de disposer des paires de trains identiques, symétriquement, de part et d'autre de l'axe central de l'engin de labour, ce qui peut permettre de compenser des forces latérales qui auraient tendance à déporter latéralement l'engin s'il ne comportait que les trains de disques inclinés dans la même direction.

L'engin peut comporter en amont du train de disques un dispositif pour ameublir le sol, comportant par exemple un ou plusieurs trains de disques parallèle(s), les disques comportant une face concave dirigée dans la direction de déplacement de l'engin.

Dans un exemple de réalisation, le sol peut être ameubli au devant du train de disques selon l'invention par d'autres moyens tels que des socs, des griffes ou autres scarificateurs.

L'engin peut comporter en outre un semoir configuré pour déposer des graines sur le sol, notamment un semoir à la volée qui dépose les graines sur le sol en amont du train de disque, ou en variante un semoir en ligne qui dépose les graines sur le sol entre les disques du train du disque ou à l'arrière du train de disques, le recouvrement des graines s'effectuant alors au moyen de divers types de herses.

Les graines peuvent être déposées sur le sol par tout dispositif de semailles approprié à la nature des graines. Les graines peuvent être par exemple semées à la volée en avant ou en amont du dispositif qui ameublit le sol.

Selon un autre exemple de réalisation de l'invention, on peut utiliser un semoir traditionnel en ligne qui dépose les graines entre les disques du train de disques selon l'invention et à l'avant de celui-ci, ce qui assure une bonne mise en place des graines même à faible profondeur. On peut ainsi modifier la profondeur à laquelle les graines sont déposées dans le sol, en faisant varier la distance entre l'axe des disques et le point où les graines sont déposées sur le sol.

Dans un exemple de réalisation de l'invention, on peut disposer d'un engin comportant un ou plusieurs trains de disques parallèles qui peuvent dans un sens de marche être utilisés comme engin de labour et qui en sens inverse peuvent être utilisés comme semoir pour enfouir des graines déposées à la volée ou en ligne.

Les trains de disques peuvent être montés sur un axe commun en étant alors coaxiaux. Ils peuvent également être chacun supportés par un bras qui permet de régler à la fois l'inclinaison de chaque disque par rapport à la verticale et par rapport à la direction d'avancement. Tous les bras sont dans ce cas solidaires d'une même poutre pour constituer le train.

Les disques d'un même train peuvent être fixés en hélice sur leur axe commun, chaque disque étant décalé par exemple d'un quart ou d'un huitième de tour par rapport à son voisin, de manière à améliorer encore l'homogénéité du labourage.

Les pales de deux disques consécutifs du train de disques peuvent être décalées angulairement d'une valeur prédéterminée, par exemple d'un angle compris entre environ 10° et 30°, voire entre 15° et 20°.

Dans le cas où l'engin comporte plusieurs trains, les disques de différents trains peuvent ne pas avoir le même nombre de pales et/ou leur montage en hélice sur l'axe des trains peut ne pas se faire avec le même pas. Cela peut permettre d'éviter avec une grande efficacité la formation d'une "semelle", c'est-à-dire d'une interface plane séparant la terre labourée de celle qui ne l'est pas, ce qui est essentiel pour maintenir la terre en bon état de culture.

Les disques peuvent être réalisés en polycarbonate, en un matériau connu sous le nom de « Téflon^{®} », ou tout autre matériau élastique, notamment lorsqu'ils sont destinés aux appareils de semis.

L'invention sera mieux comprise à la lecture de la description détaillée qui va suivre, d'exemples de réalisation non limitatifs de l'invention, et à l'examen du dessin annexé sur lequel :
- la figure 1 est une vue en élévation d'un disque de labour conforme à l'invention,
- la figure 2 est une vue en coupe selon II - II du disque de la figure 1,
- la figure 3 est une vue analogue à la figure 2 d'une variante de réalisation,
- les figures 4 à 7 sont des vues analogues à la figure 1, schématiques et partielles, de variantes de réalisation de l'invention,
- la figure 8 présente un train de disques selon l'invention,
- la figure 9 est une vue schématique de dessus d'un engin selon l'invention,
- la figure 10 est un mode de réalisation d'un engin selon l'invention dans lequel la terre est ameublie en amont du semoir par un train de disque travaillant de manière conventionnelle, et
- la figure 11 est un mode de réalisation de l'invention comportant des trains de disques disposés symétriquement de part et d'autre de l'axe de l'engin, les trains de disques arrière pouvant être basculés de manière à présenter dans la direction d'avancement, soit la face convexe des disques pour utiliser l'engin en semoir, soit leur face concave pour utiliser le train de disques de manière traditionnelle comme engin de labour.

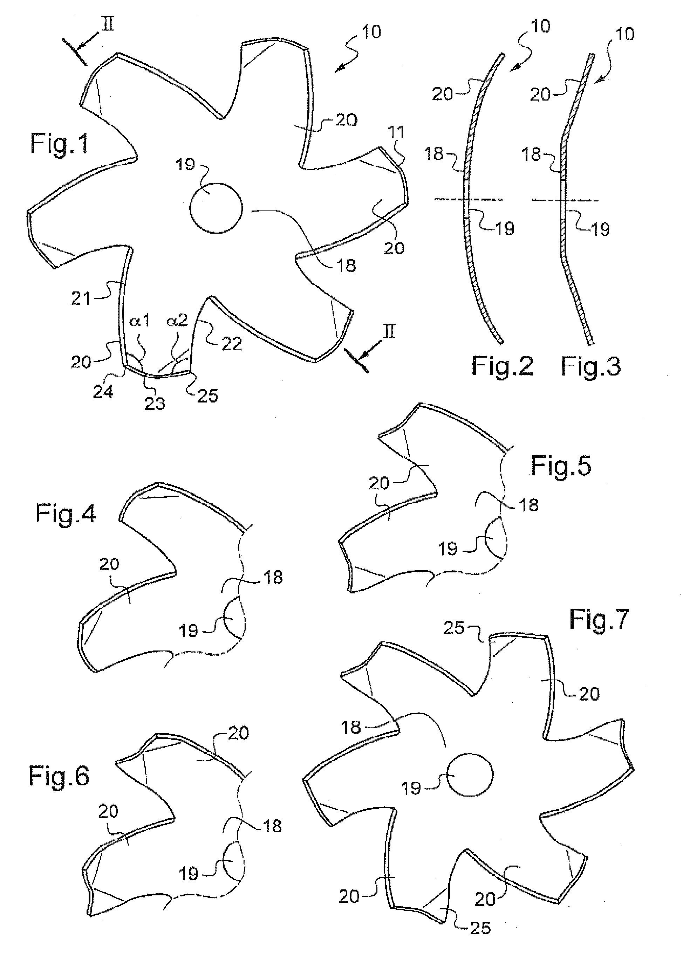

On a illustré à la figure 1 un disque de labour 10 conforme à l'invention, comportant dans sa partie centrale 18 un orifice 19 permettant son montage de manière connue sur un axe solidaire d'un châssis d'un engin de labour tel qu'une charrue, axe autour duquel il peut tourner librement.

Le disque de labour 10 comporte une périphérie 11 présentant une succession de pales 20 se rejoignant suivant des angles francs 22.

Dans l'exemple décrit, on prévoit un nombre pair de pales 20, à savoir six, par exemple compris entre 3 et 10. Cependant, on ne sort pas du cadre de la présente invention si un disque de labour conforme à l'invention comporte un nombre impair de pales, par exemple cinq pales.

En outre, les pales se rejoignent dans l'exemple décrit selon des angles francs, mais on ne sort pas du cadre de la présente invention s'il en est autrement, et si les pales se rejoignent par exemple selon une partie concave.

Le disque de labour 10 présente dans l'exemple décrit une forme générale concave, son centre 12 étant décalé d'un même côté de l'ensemble de sa périphérie 11, comme illustré en coupe sur la figure 2.

Enfin, la partie centrale du disque de labour est dans l'exemple illustré aux figures 1 et 2 de forme générale concave, mais on ne sort pas du cadre de la présente invention lorsque le disque comporte une partie centrale sensiblement plane, comme illustré à la figure 3.

Les disques décrits ci-dessus peuvent être réalisés par exemple par formage ou par moulage, et avoir un diamètre compris entre 47 cm et 150 cm par exemple.

Les pales 20 du disque 10 comporte chacune un premier bord 21 convexe vers l'extérieur, un deuxième bord 22 concave vers l'extérieur, opposé au premier, et un troisième bord 23 adjacent aux premier 21 et second 22 bords, formant un angle obtus α₁ avec le premier bord et un angle aigu α₂ avec le second bord, et définissant respectivement des première 24 et deuxième 25 pointes de la pale 20. Le second bord 22 concave de la pale 20 s'étend dans l'exemple décrit en direction du centre du disque 19.

En outre, l'une des pointes 24, 25 d'une pale 20 est repliée par rapport au reste de la pale.

On voit dans l'exemple des figures 1 et 2 que la deuxième pointe 25 de la pale 20 est repliée par rapport au reste de la pale 20. Il en est de même des autres pales 20 du disque 10 illustrées à la figure 1.

Dans la variante de réalisation illustrée à la figure 4, c'est la première pointe 24 des pales 20 qui est repliée par rapport au reste de la pale.

Dans ces exemples, les pointes 24 ou 25 repliées de la pale sont repliées vers l'intérieur de la concavité du disque.

Bien entendu, on ne sort pas du cadre de la présente invention s'il en est autrement, et si les pointes des pales sont repliées vers l'extérieur de la concavité du disque, comme illustré à la figure 5. Dans cet exemple, les pointes 25 sont repliées vers l'extérieur de la concavité du disque.

Dans les exemples qui viennent d'être décrits, une seule de deux pointes 24 ou 25 d'une pale 20 est repliée, mais on ne sort pas du cadre de la présente invention si les deux pointes d'une pale 20 sont repliées par rapport au reste de la pale, comme illustré à la figure 6. Dans cet exemple, les deux pales sont repliées vers l'intérieur de la concavité du disque, mais on ne sort pas du cadre de la présente invention si les deux pointes d'une même pale sont repliées chacune dans deux sens opposés, l'une par exemple vers l'intérieur de la concavité du disque et l'autre vers l'extérieur de la concavité du disque, dans le cas où le disque présente une forme générale concave.

Par ailleurs, toutes les pointes repliées d'un disque peuvent être repliées toutes dans un même sens, comme illustré précédemment.

En variante, les pointes repliées des deux pales successives peuvent être repliées dans des sens opposés. A titre d'exemple, on a illustré à la figure 7 un disque dans lequel les pointes 24 des pales 20 sont repliées, les pointes 24 de deux pales successives étant repliées chacune dans deux sens opposés.

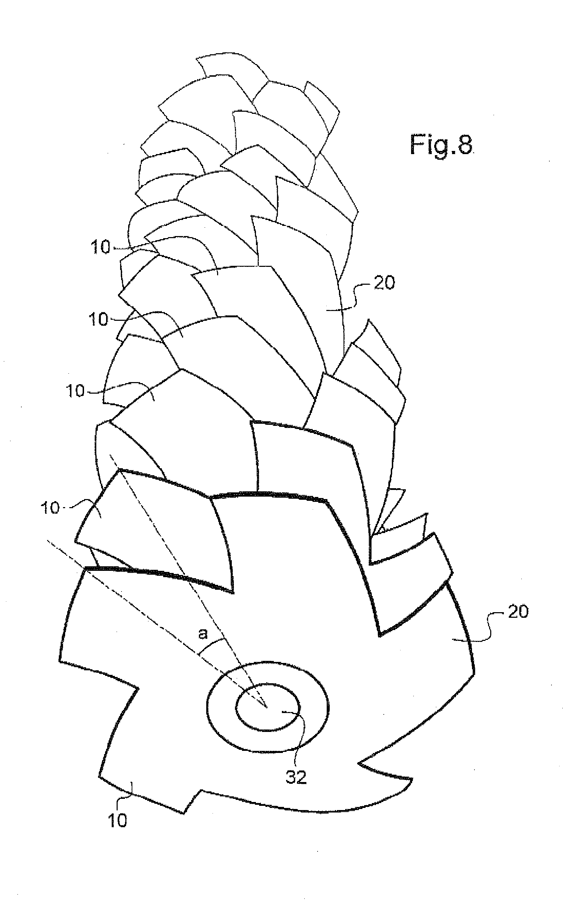

On voit sur la figure 8 un ensemble de disques 10 montés solidaires d'un arbre de rotation 32, pour former un train de disques 2.

L'arbre 32 est monté libre en rotation sur un châssis non représenté d'un engin de labour, par exemple une charrue, de manière à être inclinée par rapport à la direction d'avancement de celui-ci.

Deux disques adjacents sont dans l'exemple décrit décalés d'un angle a qui, dans le cas illustré, est sensiblement égal à 18°.

Un tel décalage de 18°, associé au fait que les disques comprennent dans l'exemple décrit cinq pales, entraîne que la position des disques sur l'axe 32 se retrouve identique à elle-même tout les quatre disques, deux disques séparés par trois disques ayant le même décalage angulaire.

Par conséquent, tous les 18° de rotation de l'ensemble des disques, un disque sur quatre attaque le terrain, rendant ainsi le fonctionnement de l'engin pratiquement sans vibrations.

Bien entendu, l'angle a pourrait avoir une valeur différente sans que l'on sorte du cadre de la présente invention.

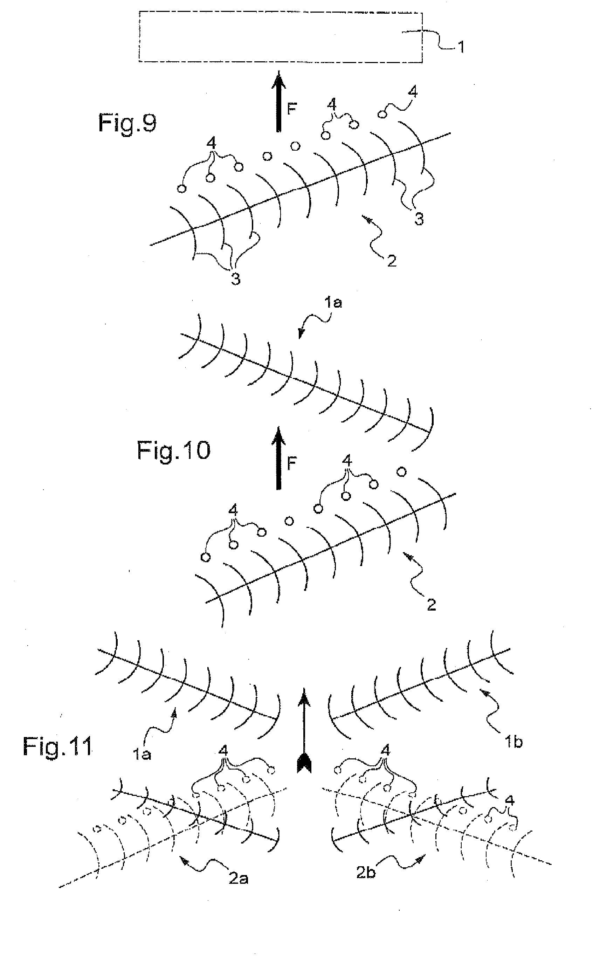

Les disques 10 conformes à l'invention rassemblés sur un train de disques 2 forment un engin de labour, la face convexe des disques pouvant être dirigée dans la direction de déplacement de l'engin, comme illustré sur la figure 9.

Le train 2 peut être précédé dans la direction d'avancement de l'engin par un engin 1 qui permet d'ameublir le sol. Cet engin 1 peut être constitué par exemple par des charrues traditionnelles, un ensemble de griffes ou un ou plusieurs trains de disques de labour.

Cet ameublissement du sol peut être réalisé soit antérieurement au passage de l'engin selon l'invention, soit avec un engin qui est physiquement relié à l'engin selon l'invention.

Dans ce dernier cas, le train de disques 2 comportant les disques selon l'invention est disposé à l'arrière de l'engin 1 qui se déplace dans le sens de la flèche F.

On peut disposer en outre à l'avant du train de disques 2 un semoir qui dépose des graines 4 pour réaliser une semaille en ligne. Les graines sont avantageusement déposées vers le milieu de la distance qui sépare les extrémités avant de deux disques voisins. Dans une variante, les graines peuvent être semées à la volée devant le train de disques 2 selon l'invention. Même si les graines ont été semées à la volée, l'engin selon l'invention tend à les replacer selon des lignes grâce à l'action de la portée inférieure des disques.

La figure 10 représente schématiquement un engin selon l'invention dans lequel on a placé pour ameublir le sol un train de disques conventionnel en avant du train de disques 2 selon l'invention, qui est associé à un semoir en ligne 4.

Dans ce train conventionnel, les disques présentent leur face avant dans la direction d'avancement de l'engin.

Enfin, dans une autre variante de réalisation illustrée à la figure 11, l'engin comporte, disposés symétriquement par rapport à l'axe de l'engin, deux trains de disques 1a et 1b qui présentent la concavité des disques en direction de l'avancement, et à l'arrière deux trains de disques 2a et 2b qui sont susceptibles de pivoter autour d'un axe vertical entre une première position représentée en trait plein dans laquelle les trains de disques 2a et 2b présentent la concavité des disques dans le sens de l'avancement de l'engin, qui a pour effet de jouer le rôle d'un engin de labour habituel, et une deuxième position représentée sur la figure 11 en traits interrompus, dans laquelle les trains de disques 2a et 2b présentent leur convexité en direction de l'avancement de l'engin, ce qui permet de les associer à un semoir en ligne 4 qui est représenté en ligne interrompue sur la figure 3, mais qui pourrait être un semoir à la volée.

Cette disposition symétrique de l'engin de la figure 11 permet d'équilibrer les forces latérales exercées par les trains de disques lorsque ces derniers ont leurs axes parallèles.

En outre, le train de disques 2 de l'invention peut comporter uniquement des disques conformes à l'invention, ou des disques d'une autre forme, par exemple un ou plusieurs disques de périphérie circulaire, ou un ou plusieurs disques tels que des disques gaufrés ou des disques lobés.

Bien entendu, l'invention n'est pas limitée aux exemples de réalisation qui viennent d'être décrits.

## Revendications

1. Disque de labour (10) destiné à être monté libre en rotation sur un engin de labour, comportant des pales (20), chacune des pales comportant :
- un premier bord (21) convexe vers l'extérieur,
- un deuxième bord (22) concave vers l'extérieur, opposé au premier, et
- un troisième bord (23) adjacent aux premier et second bords, formant un angle obtus (α₁) avec le premier bord et un angle aigu (α₂) avec le second bord, et définissant respectivement des première (24) et deuxième (25) pointes de la pale,
**caractérisé par le fait qu'**au moins l'une des pointes (24; 25) d'au moins une pale (20) est repliée par rapport au reste de la pale.

2. Disque selon la revendication précédente, dans lequel au moins la première pointe (24) d'au moins une pale est repliée par rapport au reste de la pale, voire toutes les premières pointes de l'ensemble des pales du disque sont repliées.

3. Disque selon l'une des deux revendications précédentes, dans lequel au moins la deuxième pointe (25) d'au moins une pale est repliée par rapport au reste de la pale, voire toutes les deuxième pointes de l'ensemble des pales du disque sont repliées.

4. Disques selon l'une quelconque des revendications précédentes, dans lequel les deux pointes (24, 25) d'au moins une pale sont repliées par rapport au reste de la pale, chacune dans deux sens opposés.

5. Disques selon l'une quelconque des revendications précédentes, dans lequel les première et/ou deuxième pointes de deux pales successives sont repliées dans le même sens.

6. Disque selon l'une quelconque des revendications précédentes, dans lequel les première et/ou deuxième pointes de deux pales successives sont repliées dans deux sens opposés.

7. Disque selon l'une quelconque des revendications précédentes, comportant un nombre pair de pales.

8. Disque selon l'une quelconque des revendications 1 à 6, comportant un nombre impair de pales.

9. Disque selon l'une quelconque des revendications précédentes, présentant une forme générale concave, son centre étant décalé d'un même côté de l'ensemble de sa périphérie (11).

10. Disque selon la revendication précédente, dans lequel la première et/ou la deuxième pointe d'une pale est repliée vers l'intérieur de la concavité du disque, voire toutes les premières et/ou deuxièmes pointes de l'ensemble des pales du disque sont repliées vers l'intérieur de la concavité du disque.

11. Disque selon l'une des deux revendications précédentes, dans lequel la première et/ou la deuxième pointes d'une pale est repliée vers l'extérieur de la concavité du disque, voire toutes les premières et/ou deuxièmes pointes de l'ensemble des pales du disque sont repliées vers l'extérieur de la concavité du disque.

12. Disque selon l'une quelconque des revendications 1 à 8, s'étendant généralement dans un plan à l'exception des pointes repliées des pales.

13. Engin de labour comportant au moins un train (2) équipé d'au moins un disque (10) selon l'une quelconque des revendications précédentes.

14. Engin de labour selon la revendication précédente, le train de disques (2) s'étendant selon un axe oblique par rapport à la direction de déplacement de l'engin.

15. Engin de labour selon la revendication 13, le train de disques (2) s'étendant selon un axe transversal par rapport à la direction de déplacement de l'engin.
